Europäisches Patentamt

European Patent Office

Office européen des brevets

(11) Publication number: **0 132 078**
A2

# EUROPEAN PATENT APPLICATION

(21) Application number: **84304523.8**

(22) Date of filing: **02.07.84**

(51) Int. Cl.⁴: **C 04 B 28/34**
//(C04B28/34, 14/10, 24/26)

(30) Priority: **19.07.83 GB 8319491**

(43) Date of publication of application:
**23.01.85 Bulletin 85/4**

(84) Designated Contracting States:
**AT BE CH DE FR GB IT LI NL SE**

(71) Applicant: **IMPERIAL CHEMICAL INDUSTRIES PLC**
**Imperial Chemical House Millbank**
**London SW1P 3JF(GB)**

(72) Inventor: **Goulding, Terence**
**300 Garswood Road**
**Gardwood Nr. Ashton Lancashire(GB)**

(72) Inventor: **Richards, David**
**27 Park Lane**
**Hartford Northwick Cheshire CW8 1PX(GB)**

(72) Inventor: **Padget, John Christopher**
**21 Ennerdale Drive**
**Frodsham Cheshire(GB)**

(74) Representative: **Oldroyd, Alan et al,**
**Imperial Chemical Industries PLC Legal Department:**
**Patents PO Box 6 Bessemer Road**
**Welwyn Garden City Herts, AL7 1HD(GB)**

(54) Coating or moulding compositions.

(57) A coating and/or moulding composition for preparing articles exhibiting heat-, fire- and corrosion- barrier properties comprises

(a) a water-insoluble particulate inorganic material, preferably a layer mineral,

(b) a water-solubilised inorganic binder, preferably a phosphate,

(c) an aqueous medium, and

(d) optionally an organic polymer, preferably a water-insoluble polymer,

components (a) and (b) being respectively at least 10% and at least 20% by weight of the combined weight of (a) and (b) and the combined weight of (a) and (b) being at least 70% by weight of the total weight of (a), (b) and (d).

Croydon Printing Company Ltd.

QM 32808 $\mathcal{EP}$

## COATING OR MOULDING COMPOSITIONS

This invention relates to compositions useful for coating substrates and/or for moulding or casting into films or other articles, and to coated articles and mouldings produced from the compositions

According to the invention there is provided a coating and/or moulding composition comprising

(a)    a water-insoluble particulate inorganic material.

(b)    a water-solubilised film-forming inorganic binder material, and

(c)    an aqueous liquid medium,

the amounts of (a) and (b) being respectively at least 10% and at least 20% by weight of the combined weight of (a) and (b).

The aqueous liquid medium (c) may be water or another aqueous medium, for example a mixture of water and a water-miscible co-solvent.

Component (b) of the compositions is a water-solubilised film-forming inorganic binder material, by which is meant a film-forming inorganic binder which normally is insoluble in water and other aqueous media, for example a metal phosphate, but which either has been rendered soluble by treatment with a solubilising agent or has been prepared in solution from sources which yield a soluble equivalent of the binder directly. Thus for example a water-insoluble metal phosphate binder can be solubilised by treatment with a solubilising agent such as ammonia or a soluble form of the binder can be prepared directly by reaction between the metal oxide and say diammonium phosphate.

We prefer to prepare component (b) by treating a water-insoluble inorganic binder with a solubilising agent so that a preferred composition provided according to the invention comprises

(a)    a water-insoluble particulate inorganic material,

(b)    a water-solubilised film-forming inorganic binder material comprising

      (i)    a water insoluble film-forming inorganic binder, and

      (ii)    an agent to solubilise the film-forming inorganic binder in aqueous media, and

(c)    an aqueous medium,

the amounts of components (a) and (b) being respectively at least 10% by weight and at least 20% by weight of the combined weight of components (a) and (b).

Articles derived from the compositions of the invention exhibit good hardness and abrasion resistance properties and possess good heat-resistance and fire-resistance properties. Some at least of the articles impart good corrosion resistance to substrates and provide good heat barriers. The articles may be regarded as chemically-bonded ceramic materials.

Articles which do not contain an organic polymer tend to be brittle whilst those containing a small amount of an organic polymer have acceptable toughness, flexibility and impact resistance properties.

The amount of the water-insoluble particulate inorganic material, which may be for example a layer mineral, in the composition should be at least 10% by weight of the combined weight of components (a) and (b) but may vary within wide limits, for example from 10% to 80% by weight of the combined weight of components (a) and (b). In general it is preferred that the particulate inorganic material comprises at least 20% by weight of the combined weight of (a) and (b) and it is especially preferred that this component comprises at least 40% by weight of the combined weight of (a) and (b). The optimum amount of the particulate inorganic material is dependent to some extent upon the surface area of the material, being in general lower the higher the surface area of the material.

The amount of the water-insoluble film-forming inorganic binder material, which may be for example a phosphate, may also vary within wide limits but should be sufficient to ensure that the inorganic component of the mixture acts as a binder. The amount of the binder should be at least 20% and may be up to 90% by weight of the combined weight of (a) and (b). Typically the composition will contain from 30% to 75% by weight of the inorganic binder based on the combined weight of (a) and (b).

As a guide, the aqueous medium content of the composition may vary from a few % by weight in the case of viscous compositions intended for example for moulding/casting or rolling into films or sheets up to about 60% or even higher by weight in the case of low viscosity compositions intended for example for application as a coating to a substrate. It is to be understood, however, that the viscosity and solids content of the composition are not entirely indicative of the usefulness of the composition and that all of the compositions are useful as either coating compositions or moulding compositions. Thus low viscosity compositions can be moulded, e.g. cast, into films and high viscosity compositions can be applied by a suitable technique such as calendering or doctoring as a coating on a substrate. We have found that whilst the figures quoted are a useful guide, there may in practice be a limit upon the amount of aqueous medium which can be present without impairing film-formation during drying of the composition.

Coatings and mouldings or castings produced by removal of the aqueous medium (and the binder-solubilising agent) from the compositions are useful in a variety of applications but for some purposes they do not possess adequate impact strength or flexibility. The impact strength and flexibility of the articles can be enhanced by inclusion of a small amount of a film-forming organic polymer and compositions containing such a polymer constitute a particularly preferred embodiment of the invention.

According to a preferred embodiment of the invention therefore there is provided a coating and/or moulding composition comprising

(a)    a water-insoluble particulate inorganic material,

(b)    a water-solubilised film-forming inorganic binder,

(c)    an aqueous medium, and

(d)    an organic polymer,

the amounts of components (a) and (b) being respectively at least 10% and at least 20% by weight of the combined weight of (a) and (b) and the combined weight of (a) and (b) being at least 70% by weight of the total weight of components (a), (b) and (d).

For coatings and mouldings designed for good high temperature performance we prefer to incorporate the minimum amount of organic polymer consistent with adequate impact resistance and/or flexibility in the resulting coatings and/or mouldings and in general we prefer that the amount of the organic polymer be from 10% to 25% by weight of the combined weight of (a), (b) and (d). The amounts of the other ingredients in the polymer-containing composition may be as hereinbefore described and in particular the relative proportions of those ingredients may be unaffected by incorporation of the organic polymer.

In the case of compositions which contain an organic polymer, we prefer to employ a water-insoluble polymer present as a dispersion in the composition. If desired the normally insoluble polymer may be rendered soluble in the aqueous medium so that it is present in solution in the composition but is rendered water-insoluble upon removal of water from the composition and de-activation of the solubilising agent.

It is desirable that compostions containing a water-soluble or water-dispersible organic polymer should also contain an agent capable of reacting with the organic polymer to subsequently render the polymer and the resulting coatings and/or mouldings water-insoluble and/or water-resistant. For example an agent which is capable of cross-linking the organic polymer upon heating of the coatings or mouldings may be incorporated in the composition. The water-insensitising agent for the organic polymer may be added as a separate ingredient of the composition but advantageously one or both of the water-insoluble film-forming inorganic binder and the inorganic binder insolubilising agent will also serve as the water-insensitising agent for the organic polymer. Thus for example the film-forming inorganic binder may contain cations such as metal cations which may serve to promote cross-linking of the organic polymer to render the polymer insoluble in and insensitive to water. A specific example of a film-forming inorganic binder which also may serve as a cross-linking agent for the organic polymer is zinc phosphate, the zinc ions constituting the polymer cross-linking agent.

Although the invention is not restricted to film-forming inorganic binders which are phosphates solubilised by ammonia, the combination of a phosphate (and especially zinc phosphate) and ammonia is a particularly beneficial one. In particular the phosphate/ammonia combination enables large amounts of particulate inorganic material to be incorporated and dispersed uniformly without causing flocculation of the composition. The ammonia/phosphate combination enables large amounts of particulate inorganic materials to be uniformly dispersed throughout the composition without the use of a dispersing agent and to provide stable compositions, although a dispersing agent such as sodium pyrophosphate or sodium tripolyphosphate may be incorporated in the composition, if desired, to facilitate dispersion of the particles of inorganic material and enhance the stability of the dispersion. Another advantage of the combination is that coatings derived from it impart good corrosion resistance to substrates such as metals and notably ferrous metals such as steel.

A further advantage of the use of a phosphate binder solubilised by ammonia is that the binder is readily rendered insoluble in and insensitive to water and other aqueous media simply by removing ammonia from the composition during and/or subsequent to removal of water from the composition. It is to be understood, however, that it is not necessary to remove all of the ammonia from the composition since coatings and mouldings containing a residual content of ammonia may still be insoluble in and insensitive to water. In practice we have found that complete removal of ammonia is unnecessary and that coatings and mouldings produced from the compositions typically contain some residual ammonia, for example about 10% by weight, based on the weight of the inorganic phosphate binding agent.

Accordingly a particularly preferred embodiment of the invention is a coating and/or moulding composition comprising

(a)     a water-insoluble particulate inorganic material,

(b)     a water-insoluble phosphate binding agent and ammonia,

(c)     an aqueous medium, and

(d)     optionally an organic polymer.

-8-

In producing the compositions of the invention the components should be mixed thoroughly so as to form a homogeneous mixture. The order of incorporation of the components is not critical although it is preferred firstly to form a solution of the film-forming inorganic binder by adding the binder to an aqueous solution of the binder-solubilising agent, for example to add a water-insoluble phosphate to an aqueous solution of ammonia to form a solution of the inorganic binder. The particulate inorganic material and the organic polymer if used may then be incorporated in any order or they may be mixed separately (providing flocculation does not occur in the mixture) and added as a mixture to the solution of the inorganic binder. For composition containing a high organic polymer content it may be convenient to dissolve the clay and/or dissolve the solubilised binder directly in an organic polymer dispersion.

The components of the composition are preferably mixed under conditions of high shear. If desired mixtures of suitable consistency may be further mixed by passage through a mill comprising a pair of co-axial rollers which may rotate in opposite directions optionally at different peripheral speeds. Mixing may be carried out at elevated temperature up to the boiling point of any of the components of the composition though care needs to be excersised to avoid loss of water and/or binder-insolubilising agent by evaporation whereby flocculation or premature setting of the mixture may be induced. For convenience, mixing may be carried out at room temperature. A concentrate may be produced which can be diluted, e.g. with water, to the desired consistency.

The consistency of the compositions may vary from a low-viscosity suspension to a highly viscous suspension or even a paste or dough and may influence the particular technique employed for applying the composition to a substrate to form a coating or to a release surface to form a self supporting casting or film. The composition may be in the form of a sheet moulding compound suitable for example for use in vacuum-forming operations. Any of the known techniques for applying coatings or forming mouldings appropriate to the consistency of the particular composition may be employed, including for example painting (brush-coating) spraying, doctoring, knife-on-roll, dipping, licking, pultrusion and impregnation in the case of coatings and casting, moulding, doctoring, knife-on-roll, injection moulding, compression moulding and dough moulding in the case of moulding and self-supporing film formation. Care should be taken in applying the composition to the surface to be coated (or the release-surface or mould in the case of films and mouldings) to avoid trapping air bubbles in the composition.

The composition will normally be used at ambient (room) temperature although any temperature up to the boiling point of the lowest-boiling component of the composition may be employed if desired. If the composition is used at an elevated temperature care should be exercised to ensure that flocculation and/or premature setting of the composition is avoided.

After application of the composition to the substrate or to the release surface or mould, the water is removed from the composition and the inorganic binder solubilising agent is rendered inactive, usually by at least partial removal from the composition. The removal or part-removal of water and the inorganic binder solubilising agent (e.g. ammonia) will usually be by evaporation which may be allowed to occur at ambient temperature and pressure but which may be and preferably is assisted by heating at above 100°C. Removal of the volatile components of the composition should be under conditions whereby the formation of bubbles of gas in the composition are avoided or at least minimised and in particular should be at a rate not sufficiently high to cause the formation of bubbles of gas and damage to the coating. Drying of the composition maybe advantageously carried out under an atmosphere of ammonia. Drying of the composition maybe advantageously carried out under an atmosphere of ammonia. After removal of most of the volatile component(s) from the composition, the coating or moulding may be heated to remove remaining volatile components at any temperature below that at which any of the remaining components, for example any organic polymer in the composition, is destroyed. Temperatures of up to say 500°C in the case of organic polymer-free compositions and say 250°C in the case of polymer-containing compositions are suitable. If desired the coating or film or moulding may be treated mechanically, for example pressed or calendered, during and/or after drying.

A wide variety of substrates may be coated with the compositions, for example wood, metal, wires, inorganic foam prills, glass, fibre optics and cementitious materials, to provide coatings which are firmly bonded to the surface of the substrate and which provide a barrier to the ingress of gases and liquids such as water to the substrate and thereby protect the substrate from damage such as corrosion (in the case of metals) and disintegration (in the case of water-sensitive materials). We have found that a coating of a preferred polymer-containing composition based on zinc phosphate on a smooth glass plate has withstood over 100,000 wet- scrubs without apparent damage in a standard wet-scrubbing coating adherence test, as in described more fully in the Examples hereinafter. Heat and/or electrically-conducting materials, which may be in the form of wires for example, may usefully be provided with a protective coating (which may be a heat insulating and/or electrically insulating coating), as also may plastics materials.

The compositions may be employed as primer coatings to enhance adhesion of a desired surface coating to a substrate. For example in the coating of metal articles such as aluminium cookware with a "non-stick" polymer such as polytetrafluoroethylene, the compositions of the invention may be used to coat the metal article to provide a surface to which the "non-stick" polymer firmly adheres. In such a case the composition used to form the primer coating may contain a small proportion of the "non-stick" polymer to be applied over the primer coating.

Substrates coated with the compositions or faced with a self-supporting film of the invention may exhibit a marked improvement in resistance to damage by heat and fire. Combustible materials can be protected from fire and/or insulated from high temperatures by coating them or facing them with the compositions or films such that the substrates are upgraded to fire-protection and insulation uses hitherto considered unattainable with such substrates. For example glass, wood or aluminium is usually destroyed rapidly by a bunsen burner or propane torch flame (temperature up to 1350°C) whilst these same substrates coated with the compositions of the invention will withstand such flames for prolonged periods without significant damage to the substrate. When exposed to flames or to very high temperatures the coating may blister and/or partially lift off the surface of the substrate but the coating remains esssentially intact and continues to protect the substrate.

Coatings and films produced from the compositions have the further advantage of resistance to hydrocarbon oils and hydraulic fluids so that they may be employed in (hot) environments containing such fluids.

In the compositions of the invention the particulate inorganic material is insoluble and preferably is inert towards water and other aqueous media although particles which have a slight reaction with water may be used. Examples of water-insoluble particulate inorganic materials which may be employed are metals, insoluble metal and non-metallic compounds and salts such as oxides, carbides and nitrides, non-hydraulic siliceous materials such as the layer minerals and sand, and glass. The particulate material may be in the form of fibres, preferably short fibres, for example metallic fibres, mineral wool, aluminosilicate fibres, alumina fibres, ceramic fibres, and glass fibres. The use of particulate materials in the form of fibres may result in increased toughness and impact strength in coatings and films produced from the compositions. Mixtures of particulate inorganic materials including for example mixtures of powdered materials and fibres may be employed, as may coated particles. We prefer to employ particles which are in the form of platelets.

Where thermal and/or electrical conductivity is desired in the products derived from the compositions, the particulate inorganic material may be a conductor for example copper, iron and aluminium. Iron and ferrites are useful in affording magnetic properties in products made from the compositions. The density of products made from the compositions may vary widely depending upon the particular particulate inorganic material employed; low density products, notably mouldings since coatings are usually too thin, may contain lightweight particulate inorganic materials for example hollow glass spheres, perlite and pieces or prills of rigid layer mineral foams. Pigments such as titanium dioxide and refractory metal oxides may be used.

The layer-silicate minerals, commonly called the layer minerals, are amongst the particulate inorganic materials which may be used and they may be in a highly delaminated form.

The layer minerals are naturally-occurring forms of silica and are phyllosilicate materials, i.e. they have a layer structure. Included within the term layer minerals are for example mica, vermiculite, kaolin and other kaolinite-containing clays, montmorillonite (bentonite), sepiolite, attapuligite, illite, saponite and slate. The clay minerals, usually kaolinite, occur in clays as particles of the order of a few microns diameter which are aggregates or agglomerates of small crystalline units of the mineral of sub-micron size. Kaolin clay is essentially an aggregate of book-shaped units of sheets of kaolinite. Kaolin, ball-clays, China clays and fire clays are all forms of kaolinite useful in the present compositions.

In the case of vermiculite very tiny platelets or lamellae obtained by chemically delaminating the ore are especially preferred. By chemically delaminated vermiculite we mean lamellae obtained in known manner by treating vermiculite with solutions of salts of metals or alkylammonium salts followed by swelling the treated ore in water and separating the layers of the swollen material. Upon deposition from aqueous suspensions, vermiculite lamellae exhibit film-forming characteristics so that compositions comprising the lamellae contain a film-forming particulate inorganic material as well as a water-solubilised film-forming inorganic binder.

The size of the particles of the inorganic material may vary within wide limits, for example from less than 1 micron to a few hundred (say 500) microns although we prefer that the majority of the particles have a largest dimension of below 100 and preferably below 50 microns. We especially prefer particles which are platelets of high aspect ratio, e.g. 100:1 to 1000:1 and which are extremely thin. The size of the particles may be dependent to some extent upon whether the composition is intended for forming coatings and films or for moulding, particles below 5 microns being preferred in coating compositions. The particulate material, especially if it contains relatively large particles, may comprise particles of different sizes such that good packing of the particles is achieved and the creation of large spaces between particles to be filled by binder (and optionally organic polymer where one is employed) is avoided.

The inorganic binder material is insoluble in water and other aqueous media such that products derived from the compositions are impermeable to and insoluble in water and in general are insenstive to water, for example they are not swelled by water. Any inorganic binder can be used which is capable of being solubilised to form an aqueous solution and is also capable of film-formation upon removal of the aqueous medium and solubilising agent from the solution. Preferably the binder should be one having an affinity for the surface of the particulate material and at least in the case of coating compositions for the surface of the substrate to be coated. As described hereinbefore, water-insoluble phosphates are particularly useful binders. Other binders which may be used include water-insoluble silicates and borates. Mixtures of inorganic binders may be used.

As stated ammonia is an especially useful agent for solubilising phosphate binders in aqueous media. However, any agent may be used which enables the binder to be dissolved in the aqueous medium and which also is capable of being inactivated in (e.g. by being removed from) the composition so as to render the inorganic binder insoluble in and insensitive to water in articles derived from the composition. Examples of other solubilising agents which may be used, depending on the particular binder, are acids such as phosphoric acid, hydrochloric acid and nitric acid.

The acid phosphates produced by dissolving metal salts such as chromium phosphate and ferric chloride in an acid, for example phosphoric acid, are well known materials and it is well known that in acid phosphates the ratio of metal ions to phosphate (and other acid) ions may vary within a wide range. The ratio of metal ions to acid ions in the acid phosphate may be important in determining the usefulness of the acid phosphate in the compositions of the invention although a suitable ratio is readily determined by simple trial and experiment. As a guide only, we have observed that in the case of chromium phosphate solubilised with phosphoric acid a suitable ratio of metals ions: phosphate ions is about 1:2, preferably 1:1.8 or greater, whilst in the case of ferric chloride dissolved in phosphoric acid a suitable ratio of ferric ions:phosphate ions is about 1:3 to 1:4 or greater.

In the case of compositions containing an organic polymer, the polymer should be soluble, solubilised, dispersible or dispersed in water or another aqueous medium or in the solubilised inorganic binder. Polymers which are insoluble in but dispersed in water are preferred since their use obviates the need to render the polymer insoluble in products derived from the compositions. The organic polymer (or its solution or dispersion in water) may be non-ionic or ionic in nature and a wide variety of polymers may be employed. The polymer preferably is film-forming and may contain functional groups such as hydroxyl groups and acid groups, notably carboxylic acid groups, which have an affinity for the surface of the particles of the particulate inorganic material and, in the case of coating compositions, for the substrate being coated. Polymers containing ethylenic unsaturation or hydroxyl functionality which can be cross-linked in the coatings and films produced from the compositions may be employed. Mixtures of polymers of different types may be used and it is to be understood that the term "polymer" as used herein includes copolymers of different monomers as well as homopolymers.

Water-soluble organic polymers which may be used include for example polyvinyl alcohol, polyacrylamide, polyvinyl pyrrolidone and polyacrylic or polymethacrylic acids and copolymers thereof. However, as stated hereinbefore, we prefer a polymer which is dispersed rather than dissolved in water. Mixtures of water-soluble or water-solubilised polymers and water-insoluble polymers may be used such that the composition comprises both a solution and a dispersion of organic polymers.

We especially prefer a dispersion or latex of the organic polymer in water or another aqueous medium for example a medium containing a water-miscible organic co-solvent. Aqueous emulsions of a solution of the polymer in an organic solvent may be used. Polymers may be prepared in the form of a dispersion or latex by an emulsion polymerisation technique or a suspension polymerisation technique, or a dispersion may be prepared by post-emulsification of a pre-formed polymer. If desired the polymer can be prepared in situ in a dispersion of the particulate inorganic material.

It is often advantageous to use a sterically stabilised or partly sterically stabilised aqueous polymer dispersion since such dispersions are especially colloid stable at high ionic strengths such as the ionic strengths in the compositions of the invention arising from the solubilised inorganic binder material. Such stabilised dispersions can be made by a number of techniques of which a preferred technique which yields a dispersion exhibiting a significant degree of steric stabilisation comprises using a non-ionic surfactant as the polymerisation surfactant in a conventional aqueous emulsion polymerisation. The non-ionic surfactant may optionally be used in the presence of an anionic surfactant. Typical non-ionic surfactants for the polymerisation are the well-known ethylene oxide condensates of phenols such as nonyl phenol.

Another preferred technique for making sterically stabilised dispersins comprises free radical initiated polymerisation in an aqueous medium of one or more ethylenically-unsaturated monomers in the presence of a steric stabiliser which is a block copolymer or graft copolymer of defined characteristics, the aqueous medium being one which is capable of dissolving the monomers to the extent of at least 3% by weight but which is a non-solvent for the resulting polymer and which comprises at least 30% by weight of water; the polymerisation is carried out at a temperature at least 10°C higher than the Tg of the polymer which is being formed. This polymerisation technique and the resulting dispersions are described in European Patent No. 13478.

Organic polymers which may be used include homopolymers and copolymers of the following: vinyl chloride, vinylidene chloride, tetrafluoroethylene, hexafluoropropene, vinylidene fluoride, vinyl esters of alkanoic acids having from 1 to 18 carbon atoms in the alkyl group, especially vinyl acetate,
acrylic and methcrylic esters of alkanoic acids having from 1 to 18 carbon atoms in the alkyl group, especially the said esters having from 1 to 12 carbon atoms in the alkyl group, for example the methyl, ethyl, butyl, and 2-ethylhexyl esters, acrylonitrile and methacrylonitrile, and mono- and di-ethylenically unsaturated hydrocarbons, for example ethylene, isobutene, styrene, alpha-methyl styrene and aliphatic dienes such as butadiene, isoprene and chloroprene, and silicone polymers and rubbers.

Polyvinyl acetate and copolymers of vinyl acetate with one or more of vinyl chloride, vinylidene chloride, styrene, acrylonitrile, methacrylonitrile, and one or both of the acrylic and methacrylic acid esters mentioned above may be used. Similarly copolymers of one or more of the acrylic or methacrylic acid esters mentioned above with one or more of vinyl acetate, vinyl chloride, vinylidene chloride, styrene, acrylonitrile, and methacrylonitrile also may be used. Homopolymers of ethylene, isobutylene, and styrene, and copolymers of one or more of these hydrocarbons with one or more esters, nitriles or amides of acrylic acid or methacrylic acid or with vinyl esters, such as vinyl acetate and vinyl chloride, or with vinylidene chloride are also useful. The diene polymers are generally used in aqueous based film-forming compositions in the form of copolymers with one or more of stryrene, acrylonitrile, methacrylonitrile, and the above-mentioned esters of acrylic acid or methacrylic acid.

It is quite common to include a small amount, such as 1 to 5 percent or more, of an acid monomer in the monomer mixture used for making the copolymers of all of the general types mentioned above. Other copolymerisable monoethylenically unsaturated monomers containing about 1 to 10 percent, and preferably 1 to 5 percent, by weight of monomers having a polar group selected from the group consisting of alcoholic hydroxyl, amino and carboxylic acid amide are also useful.

0132078

-20-

Aqueous dispersions of pre-formed polymers may be made using one or more emulsifiers of anionic, cationic, or non-ionic type. This technique is particularly useful for preparing dispersions of polymers which cannot be made by aqueous emulsion polymerisation or suspension polymerisation. Examples of such polymers are polymers made by condensation polymerisation, anionic polymerisation, cationic polymerisation and organo-metal catalysed polymerisation, for example polypropylene, polyethylene, polyurethanes and polyethers. Mixtures of two or more emulsifiers regardless of type may be used, though it is generally undesirable to mix a cationic with an anionic type in any appreciable amounts. We especially prefer aqueous dispersions of polymers stabilised with non-ionic emulsifying agents.

Where fire-protection and flame-retardancy are requirements of the coating or moulding produced from the compositions, one suitable polymeric binder is that derived from a halogen-containing monomer and which is a halogen-containing polymer or copolymer e.g. a copolymer of (i) vinyl chloride, (ii) vinylidene chloride and (iii) one or more alkyl arcylates or alkyl methacrylates having from 1 to 12 carbon atoms in the alkyl group; such polymers may optionally also contain one or more aliphatic alpha-beta unsaturated carboxylic acids. Examples of such copolymers are those described generally and specifically in our United Kingdom Patent Specification No. 1 558 411 and European Patent Publication No. 30080A1.

The polymer-containing compositions of the invention may contain in addition a coupling agent to promote bonding between the polymer and the particulate inorganic material.

The invention is described hereinbefore as a coating or moulding composition comprising a particulate inorganic material, a solubilised inorganic binder and an aqueous medium which composition may contain an organic polymer. An alternative way of viewing the compositions containing an organic polymer is that they are filled organic polymer compositions. As is described hereinbefore the use of a phosphate binding agent and ammonia combination enables large amounts of particulate inorganic materials to be incorporated in and thoroughly dispersed in the compositions which accordingly may be viewed as dispersions of a large amount of particulate inorganic materials in an organic polymer. Thus, expressed in another way, the invention provides a method of producing organic polymer compositions, for example paint formulations, having a loading of a particulate inorganic filler material, or as a method of dispersing particulate inorganic fillers in organic polymers.

The invention is illustrated by the following examples in which all "percentages" are by weight unless otherwise stated.

Example 1

Zinc phosphate (100 g of PZ 40 - $Zn_3(PO_4)_2.2-4H_2O$ - available from Waardhals) was added to 25% aqueous ammonia solution (100 g) in the mixing bowl of a Silverson high-shear mixer. The mixture was stirred gently to dissolve the zinc phosphate and any residue was dispersed using the Silverson mixer fitted with a high-shear stirrer. Ball clay powder (100 g - Grade MDC available from English China Clays) was added to the bowl and thoroughly dispersed in the aqueous phosphateammonia solution using the high-shear stirrer.

The resulting composition was viscous and 25% ammonia solution (approx 30 g) was added to dilute the composition to produce a coating composition which was applied to a number of mild steel "Q-panels" (type S-46 available from the Q Panel Company) using a hand-coating instrument (type K. No. 7 available from R K Paint-Coat Instruments Ltd). The resulting coated panels were dried at 105°C in an air oven for about 10 minutes, until ammonia could not be detected in the coating by odour or by litmus paper.

Coatings of various thickness from 10 microns to 40 microns were provided on the Q-panels and in each case it was observed that the coating appeared to be firmly bonded to the surface of the panel. A coated panel on which the coating was of thickness 15 microns was subjected to a wet-scrub test using an "REL" Multihead Abrasion Test instrument in which the water-melted coating was scrubbed with a nylon brush carrying a 500 g weight. After 20,000 scrubs the coating was examined and showed no visible signs of damage such as removal from the surface of the panel.

A coated panel on which the coating was of thickness 20 micron was subjected to a cross-hatch test in which the coating was cut with a cross-hatch cutter (Sheer Instruments Ltd) set at 1 mm spacing and evaluated according to BS 3900 : Part E6 : 1974. A rating of '0' was recorded. A strip of "Sellotape" was stuck down over a cross-hatched portion of the coating and then peeled off; the coating between the cross-hatch cuts was unaffected and in particular was not peeled from the surface of the panel by the "Sellotape".

Another coated panel was heated at 600°C in a furnace and it was observed that the coating did not burn and did not peel or flake off the surface of the panel. The coated panel was allowed to cool to room temperature whereupon a piece of "Sellotape" was stuck to the coating and then peeled off. The coating was not removed by the "Sellotape".

Example 2

A coating composition was prepared as described in Example 1 from 50 g of zinc phosphate (PZ 40), 150 g of 25% aqueous ammonia solution and 42 g of a 60% aqueous slurry of chemically delaminated vermiculite (produced by refluxing vermiculite ore granules with salt solution and then n-butylammonium chloride solution followed by swelling in water and milling to yield extremely thin platelets and finally by seiving to remove all particles larger than 50 microns and concentration to 60% solids by evaporation).

The coating composition was passed through a 90 micron mesh and then used to coat mild steel Q-panels as in Example 1 to coating thicknesses from 10 microns to 50 microns. The coated panels were allowed to air-dry by standing for 25 days before examination and testing. In each case the coating appeared to be firmly bonded to the surface of the mild steel panel.

A coated panel on which the coating was 18 microns thick was subjected to the wet-scrub test (Example 1) and remained intact after 55,000 scrubs.

Example 3

A coating composition was prepared as described in Example 1 from 50 g of zinc phosphate (PZ 40), 75 g of 25% aqueous ammonia solution and 60 g of mica (Grade P325 available from Microfine Minerals and Chemicals Ltd).

A mild steel Q-panel was coated with the composition as described in Example 1 and dried in an air-oven at 105°C for about 10 minutes. The thickness of the dry coating was 14 microns and the coating remained intact after 2,000 scrubs in the wet-scrub test described in Example 1.

Example 4

A coating composition was prepared as described in Example 1 from 50 g of zinc phosphate (PZ 40), 75 g of 25% aqueous ammonia solution, 25 g of kaolin and 25 g of mica (Grade P325).

A mild steel Q-panel coated with the composition as described in Example 2 (air-dried for 25 days) was subjected to the wet-scrub test described in Example 1. The coating, thickness 17 microns, showed no visible signs of abrasion damage after 10,000 scrubs.

Example 5

A coating composition comprising 100 g of zinc phosphate (PZ 40), 150 g of 25% aqueous ammonia solution and 100 g of kaolin was prepared and used to coat mild steel Q-panels as described in Example 2 with air drying for 30 days. A coating of thickness 16 microns withstood 7,000 scrubs in the wet-scrub test without visible signs of serious abrasion damage.

Example 6

A coating composition prepared from 50 g of zinc phosphate (ZP 40), 50 g of 25% aqueous ammonia and 50 g of zinc oxide powder was coated onto a mild steel Q-panel and dried by standing in air for 25 days. The dry coating had a thickness of 6 microns and was of translucent appearance. In the wet-scrub test the coating survived 1,000 scrubs but on examination was observed to have lost its translucent appearance.

Example 7

A coating composition was prepared as described in Example 1 from 25 g of zinc borate (Pfaltz Bauer Inc.), 75 g of 25% aqueous ammonia and 25 g of ball clay powder (Grade MDC); except that disolution of the zinc borate was assisted by heating the mixture. A coating of thickness 25 microns on a mild steel Q-panel, dried by heating at 105°C for 10 minutes, withstood 1,000 scrubs in the wet-scrub test after which it exhibited signs of slight abrasion damage although the surface of the mild steel panel had not been exposed.

Example 8

This example illustrates the use of a mixed inorganic binder system.

A coating composition was prepared as described in Example 7 from 30 g of zinc phosphate (ZP 40), 20 g of zinc borate, 50 g of 25% aqueous ammonia and 50 g of ball clay (MDC Grade).

A coating of thickness 25 microns on a mild steel Q-panel, dried at 105°C for 10 minutes, survived 3,000 scrubs in the wet-scrub test with only superficial abrasion damage.

Example 9

Ferric chloride (anhydrous - 16 g) was dissolved in methanol (40 g) and the solution was added to 88% aqueous phosphoric acid (20 g). Ball clay (MDC Grade - 25 g) was added to the mixture and dispersed using a Silverson mixer fitted with a high-shear stirrer.

The resulting coating composition was coated on to glass plates using the No.7 hand-coater and heated at 150°C to dry it and to remove hydrogen chloride from the coatings. Hard, water-resistant coatings were obtained.

Example 10

Chromium nitrate ($Cr(NO_3)_3.7H_2O$ - 20 g) was dissolved in water (75 g) and the solution was added to 88% phosphoric acid (20 g). Ball clay (MDC Grade - 30 g) was dispersed in the solution using the Silverson mixer fitted with a high-shear stirrer.

The resulting coating composition was coated on to glass plates and aluminium plates as in Example 9 and the coatings were dried at 150°C. Hard, water-resistant coatings were obtained.

Example 11

A coating composition was prepared as described in Example 1 from 100 g of zinc phosphate (PZ 40), 175 g of 25% aqueous ammonia and 100 g of ball clay (BDC Grade). An organic polymer dispersion (44 g) was added to the composition and dispersed using the Silverson mixer. The organic polymer dispersion was an approximately 55% solids sterically stabilised aqueous latex containing a copolymer of methyl methacrylate, 2-ethyl hexyl acrylate and methacrylic acid (52.7:46.3: 1.0 by weight) prepared by polymerising the monomers in an ethanol/water mixture in the presence of methoxy (polyethylene glycol)$_{2000}$ methacrylate as described in European Patent No. 13478. The copolymer (Aquersymer ST4/1825) had a nominal Tg of -3°C and the latex was of solids content 54.7% and viscosity (Cone-and-Plate) 3.5 poise and the particle diameter was 0.286 micron.

Coatings of dry thickness ranging from 20 microns to 30 microns were produced from the resulting coating composition on mild steel Q-panels and dried by standing for 30 days.

A coated panel was immersed in water for 13 days, after which time the coating showed no signs of blister formation and there was no sign of rusting of the mild steel panel.

A coated panel was subjected to the wet-scrub test and showed no signs of abrasion damage after 55,000 scrubs. No evidence of blister formation in the coating or rusting of the panel was observed.

A coated panel was subjected to the cross-hatching test described in Example 1, and a rating of '0' was recorded. The "Sellotape" peel test described in Example 1 did not result in removal of any of the coating.

A further coated steel panel was heated in the flame from a Bunsen burner. The coating did not burn except that a slight flickerring flame was observed; this flame was extinguished immediately upon removal of the Bunsen burner flame. The coating did not show any signs of peeling or flaking off the panel and application and then peeling off of a strip of "Sellotape" did not remove the coating.

The coating composition was used to coat a glass plate and the coating was dried by heating at 105°C. The dry coating, thickness 20 microns, survived 100,000 scrubs in the wet-scrub test without any sign of abrasion damage.

Example 12

A coating composition was prepared as described in Example 11 from 100 g of zinc phosphate (PZ 40), 175 g of 25% aqueous ammonia, 100 g of ball clay (Grade MDC) and 200 g of an organic polymer latex (Aquersymer ST4/1825 as in Example 11 diluted to 25% solids with 25% aqueous ammonia).

Coatings produced on mild steel Q-panels and dried by standing for 30 days, of thickness from 20 to 30 microns, were evaluated:-

A coated panel was soaked in water for 10 days, after which time the coating was not blistered and there was no sign of rusting of the mild steel surface beneath the coating.

A coated panel was subjected to a salt spray test BS 3900, Part 4, 1968 in which the results were zero for Blister size and Blister density and the extent of the rusted area of the panel was less than 5% of the area of the panel.

In the wet-scrub test, the coating on another panel survived 55,000 scrubs without any signs of abrasion damage, blistering, flaking or rusting. The coating on another panel produced a '0' rating in the cross-hatch test and no coating was removed in a subsequent "Sellotape" peel test.

A further coated panel was placed in the flame from the Bunsen burner and a slight, flickering flame was observed. The slight flame was extinguished immediately upon removal of the coated panel from the flame and the coating was found to be still firmly adhered to the surface of the panel. Application and subsequent peeling off of a strip of "Sellotape" did not remove any of the coating.

Example 13

A coating composition was produced as described in Example 11 from 100 g of zinc phosphate (PZ 40), 175 g of 25% aqueous ammonia, 100 g of ball clay (Grade MDC) and 172g of a 50% solids aqueous dispersion of an organic polymer (Aquersymer ST4/1825). The coating composition was applied to mild steel Q-panels and the coatings were dried by standing for 30 days. The dry coatings were of thickness 30 to 40 microns.

A coated panel remained apparently unaffected by soaking in water for 13 days. The coating showed no signs of blistering or flaking and the mild steel panel showed no signs of rusting.

In the wet-scrub test the coating survived 55,000 scrubs without damage.

In the cross-hatch test the coating received a '1' rating and no coating was removed by a subsequent "Sellotape" peel test.

Example 14

A coating composition was prepared as described in Example 11 from 100 g of zinc phosphate (PZ 40), 100 g of 25% aqueous ammonia, 100 g of ball clay (Grade MDC) and 83 g of an organic polymer latex. The latex was a 60% solids aqueous latex of a copolymer of vinylidene chloride, vinyl chloride, 2-ethyl hexyl acrylate and acrylic acid (70:22:6:2 by weight) polymerised in the presence of the surfactant nonyl phenol/(ethylene oxide)$_{30}$ available under the trade-name Synperonic HP30. The latex is available as "Haloflex" 202S from Imperial Chemical Industries PLC.

The composition was applied to mild steel Q-panels and the resulting coatings were dried by standing for 16 days. The dry coatings were of thickness 20 to 35 microns.

After soaking of a coated panel in water for 12 days, the coating exhibited blistering (blister size 6) at medium density but remained intact.

In the wet-scrub test, a coating withstood 30,000 scrubs without significant abrasion damage but after 55,000 scrubs a few small patches of exposed metal were observed.

In the cross-hatch test another coating received a '1'-rating; the coating remained intact between the cuts. A few pieces of the coating were removed from between the cuts in a subsequent "Sellotape" peel test.

In a salt spray test BS 3900, Part 4, 1968, the Blister size and Blister density were each zero and the extent of rusting of the panel was less than 5% of the area of the panel.

### EXAMPLES 15-18

Using the procedure described in Example 1, zinc phosphate was dissolved in 25% aqueous ammonia solution and ball clay (Grade MDC) was dispersed in the solution. To the resulting dispersion was added a mixture of a 50% solids organic polymer latex (Aquersymer ST4 1825) and 25% aqueous ammonia and the mixture was stirred using the high-shear stirrer. For purposes of comparison, a composition was prepared as above but excluding the clay.

The following compositions were produced

| Ex No. | Zinc Phosphate | Clay | Ammonia (25%) | Polymer(50%)+ Ammonia (25%) |
|---|---|---|---|---|
|  | (g) | (g) | (g) | (g) |
| 15 | 120 | 80 | 200 | (100 + 50) |
| 16 | 110 | 90 | 200 | (100 + 50) |
| 17 | 130 | 70 | 200 | (100 + 50) |
| 18 | 80 | 20 | 100 | (46 + 25) |
| Comparison | 80 | − | 100 | (36 + 50) |

Mild steel Q-panels (type S46) were coated with the compositions as described in Example 1 to provide coatings of thickness 20 to 35 microns (see Table below). In each of Examples 15-17 the coating was dried at ambient temperature; in Examples 18 and 19 the coating was dried at ambient temperature for 1 hour, then at 105°C for 5 minutes. The dry coatings were subjected to the cross-hatching test and subsequent "Sellotape" peel test described in Example 1. the results are shown in the Table.

| Ex. No. | Clay (%) | Coating Thickness (microns) | Cross-Hatch Rating | |
|---------|----------|------------------------------|--------------------|---|
| | | | before 'sellotape' | after 'sellotape' |
| 15 | 21.6 | 25 | 0 | 0 |
| 16 | 21.6 | 28 | 0 | 0 |
| 17 | 21.6 | 26 | 0 | 0 |
| 18 | 16 | 30 | 1 | 2 |
| Comparison | 0 | 23 | 1 | 2 |

The coating in the Comparison experiment was readily scraped off the mild steel panel with a finger nail whilst the coatings containing clay (Examples 15-18), especially those containing more than 20% by weight of clay, were much more resistant to damage by the finger nail.

In further experiments, the coated panels in Examples 15, 16 and 17 were subjected to a salt spray test according to BS 3900, Part F4, 1968. In each experiment the coating remained free from blisters (Blister size = 0; Blister density = 0) and the extent of the rusted area of the panel was less than 5% of the area of the panel.

EXAMPLE 19

Using the procedure described in Example 11, a coating composition was prepared containing 10.8% by weight of total solids from:-

| | | |
|---|---|---|
| Zinc phosphate | 50g | |
| 25% Aqueous ammonia | 75g | |
| MDC Ball Clay | 50g | |
| 50% Organic Polymer latex (Aquersymer ST4 1825) | 44g | (22g polymer) |

Mild steel Q-panels (S46) were coated with the composition and the coatings were dried at ambient temperature. A coated panel in which the coating thickness was 20 microns was subjected to a salt spray test after which Blister size was 0, Blister density was 0 and the extent of rusting of the surface of the panel was about 50% of the area of the panel.

For purposes of comparison, a coating composition was prepared as above containing 32% by weight of the organic polymer (using 87.5g of 25% aqueous ammonia and 86g of a 50% polymer latex). In the salt spray test the results were Blister size = 8, Blister density = medium and extent of rusting of the panel was about 30% of the area of the panel.

EXAMPLES 20, 21.

In Examples 11-19 the coating compositions described containing an organic polymer are prepared by dispersing the particulate inorganic filler in the solubilised inorganic binder and then incorporating the organic polymer in the dispersion. Examples 20, 21 illustrate the preparation of coating compositions by dispersing the inorganic particulate filler in an organic polymer latex and then incorporating the solubilised inorganic binder in the dispersion.

Coating compositions were prepared to the formulations below from zinc phosphate (Diroval), 25% aqueous ammonia, clay (MDC) and an organic polymer latex (Aquersymer ST4 1825). The organic polymer latex was dispersed in 25% aqueous ammonia solution using a Silverson mixer fitted with a high shear stirrer. Ball clay was added to the dispersion and dispersed by stirring after which a solution of zinc phosphate in 25% aqueous ammonia was stirred into the dispersion.

| Ex.No. | Zinc phosphate (g) | Clay (g) | Aq.Ammonia* (g) | Polymer (g of 50% latex ) |
|--------|--------------------|----------|------------------|---------------------------|
| 20 | 80 | 100 | 100 + 80 | 82 |
| 21 | 100 | 80 | 120 + 120 | 68 |

* quoted as (g used to dissolve phosphate) + (g used to disperse clay in latex).

The coating composition in each Example was a stable, uniform dispersion which applied readily to mild steel Q-panels to yield good, firmly adhered coatings on drying.

EXAMPLES 22-25

Using the mixing procedure described in Example 11 but using kaolin instead of MDC clay, a coating composition was prepared from:-

Example 22 - Zinc phosphate        110g
              Kaolin               90g
              25% Aqueous Ammonia  150g
              Organic Polymer      91g + 100g Aqueous Ammonia
              (Aquersymer ST4 1825)

Three further coating compositions were prepared as above in which a portion of the kaolin was replaced by titanium dioxide powder (Grade APP2 from British Titan Products):-

Example 23 - Kaolin             70g
              Titanium Dioxide  20g


Example 24 - Kaolin             45g
              Titanium Dioxide  45g
Example 25 - Titanium Dioxide   90g

Mild steel Q-panels were coated with each of the compositions and the coatings were dried at ambient temperature for 1 hour and then by heating at

0132078

-34-

105°C for a few minutes. Coated panels were subjected to a bending test in which they were bent around a 4 mm. diameter mandrel; each coating remained firmly adhered to the panel and each sample passed the test. Further coated samples were subjected to the cross-hatch test in which the following results were determined:-

| Example No. | Cross-Hatch Rating | |
|---|---|---|
| | before 'sellotape' peel | after 'sellotape' peel |
| 22 | 0 | 0 |
| 23 | 1 | 1 |
| 24 | 1 | 2 |
| 25 | 1 | 2 |

EXAMPLES 26

MDC clay (100 g) was dispersed in a solution of zinc phosphate (100 g) in 25% aqueous ammonia solution (150g) using a Silverson mixer with high shear stirrer. A dispersion of an organic polymer (Aquersymer) latex (50% solids - 100g) in 25% aqueous ammonia (100 g) was stirred into the clay dispersion.

E-glass fibres of length 3mm were dispersed in dilute hydrochloric acid solution and the dispersion was filtered to yield a glass-fibre mat which after drying was added to the clay dispersion and dispersed using the Silverson mixer to yield a coating composition containing glass fibres.

Mild steel Q-panels were coated with the composition using a Meyer bar technique and the coatings were dried at ambient temperature and then further dried at 105°C for 20 minutes.

In the salt spray test BS 3900, Part 4, 1968, a coated panel on which the coating was 38 microns thick showed no blisters in the coating or rusting of the panel after 1,000 hours exposure.

In a bending test another coated panel was bent around a 4 mm diameter mandrel; the coating did not crack or flake off and remained firmly adhered to the panel.

EXAMPLE 27

Polyvinylalcohol (10g - Kuralon 105/1 (70°C)) was dissolved in deionised water at 70°C and MDC clay (45g) was dispersed in the polymer solution using a Silverson mixer for about 10 minutes. A solution of zinc phosphate (55g) in 25% aqueous ammonia (100 g) was stirred into the clay dispersion which then was passed through a 53 micron sieve to yield a smooth, stable coating composition which applied readily by Meyer bar to mild steel Q-panels and dried into good, firmly adhered coatings.

EXAMPLE 28

Zinc phosphate (110 g) was dissolved in 25% aqueous ammonia (180 g) and MDC clay (90g) was dispersed in the solution using a Silverson mixer. To the dispersion was added a mixture of a silicone water - based elastomer (100g of Q3-S025 from Dow Corning) and 25% aqueous ammonia (20g). The mixture was stirred to yield a smooth, stable coating composition which applied readily by Meyer bar to mild steel panels and dried to yield good, firmly adhered coatings.

EXAMPLE 29

Zinc phosphate (495g) was dissolved in 25% aqueous ammonia (1,000g) by mixing for 15 minutes using a Silverson mixer. MDC ball clay (405g) was dispersed in the solution by mixing for 20-30 minutes. To the gently-stirred dispersion was added a stirred mixture of a 50% solids organic polymer latex (328g - Aquersymer ST4 1825) and 25% aqueous ammonia (100g).

The resulting coating composition, which was of solids content approximately 50% and contained approximately 20% by weight of organic polymer based on total solids, was coated onto bare, tinned (nickel-plated) copper, single strand wire of 25 SWG (approx 550 micron diameter).

The wire is pulled upwardly through a degreasing chamber packed with glass fibre and methylene chloride, then through a coating chamber containing the coating composition and through a drying chamber comprising six drying zones each heated separately and producing a range of temperatures within each zone. The dried wire is then pulled through a curing oven set at 180-200°C and wound up on a driven take-up reel. The add-on of the dry coating composition is approx. 0.022g ft$^{-1}$ and coating thickness is approx. 20-40 microns. The coated wire can be coiled to a coil diameter of 1 to 1.2 cms before cracking of the coating can be detected at a magnification of 10. In tests at 98% Relative Humidity and 38°C, absorption of water by the coated wire was found to be approx. 0.0012g ft$^{-1}$ (approx. 6% by weight).

EXAMPLE 30

Zinc phosphate (20g - Diroval 20p) was dissolved in 25% aqueous ammonia (150g) and MDC clay (90g) was dispersed in the solution. A mixture of a 50% solids organic polymer latex (90g -Aquersymer ST4 1825) and 25% aqueous ammonia (100g) was added to the dispersion and the mixture was stirred by hand and then using a Silverson high-shear stirrer.

Titanium 115 alloy panels, cleaned by grit-blasting, were coated with the composition to provide coatings of thickness approx. 25 microns. The coatings were dried for about 1 hour at ambient temperature and then for 15 minutes at 105°C.

A coated panel was heated at 600°C for 1000 hours and allowed to cool to ambient temperature. The coating showed no signs of spallation. The increase in weight of the coated panel (due to formation of an oxide layer on the alloy) was determined and it was found that the % weight gain was only 40% of the gain observed in a similarly treated, uncoated, grit-blasted panel.

A coated panel was heated at 900°C for about 5 minutes to remove the organic polymer from the coating until the coated panel reached minimum weight. The panel was then heated at 900°C in an oven for a total of 140 minutes; after 15, 30 110 and 140 minutes the panel was removed from the oven, cooled to ambient temperature and weighed and its weight gain was determined :-

| Time (mins) | Coated Panel (wt. gain – $mgcm^{-2}$) | Comparison Uncoated Panel (wt. gain – $mgcm^{-2}$) |
|---|---|---|
| 5 | 0.19 | 0.81 |
| 30 | 0.31 | 1.15 |
| 110 | 0.79 | 2.68* |
| 140 | 0.70 | --* |

(* denotes catastrophic spallation of the coating on cooling)

Further coated panels were heated at 900°C for up to 3 hours and the time was determined at which spallation of the coating occurred on cooling the panel to ambient temperature; the time was approx. 3 hours. For comparison an uncoated panel was heated at 900°C and in this case spallation was observed after 30 minutes.

EXAMPLE 31

Using the coating composition and procedure described in Example 30, coatings of thickness approx. 25 microns were produced on aluminium Q-panels (6.5 cm x 6.5 cm x 0.065 mm). A coated panel was supported on an alumina fibre ring of diameter 6 cm in a Bunsen burner flame providing a maximum observed temperature at the surface of the panel of 1170°C. The rate of transmission of heat through the panel was assessed by observing the time at which melting of the back face of the panel occurred and the time at which a red glow appeared due to thinning of the panel. For comparison, an uncoated panel was treated similarly.

|                | Time to Melting (secs) | Time to Red Glow (secs) |
| -------------- | ---------------------- | ----------------------- |
| Coated Panel   | 85                     | 360                     |
| Uncoated Panel | 50                     | 72                      |

The samples were removed from the flame on appearance of a red glow and allowed to cool. No easily - punctured area was detected in the coated sample (6 minutes in the flame) whereas the uncoated panel (72 seconds in the flame) was easily punctured due to excessive thinning of the panel.

EXAMPLE 32

Zinc phosphate (110g) was dissolved in 25% aqueous ammonia by shaking in a glass bottle. MDC clay (90g) was stirred into the solution and dispersed using a Silverson mixer for 5 minutes after which time a mixture of an organic polymer latex (90g - 50% solids - Aquersymer ST4 1825) and 25% aqueous ammonia (100g) was added. The mixture was stirred in the Silverson mixer at low speed for a few minutes and then at high speed for 30 seconds. The resulting composition was brushed through a 53 microns sieve.

The composition was used to coat aluminium Q-panels and mild steel Q-panels to a coating thickness of 30 microns. The coatings (except in Expt 1) were dried at ambient temperature for 1 hour followed by various drying regimes as shown in the Table below and the scratch hardness of the coatings was then determined. The results, expressed as the load on the stylus required to expose bare metal in the scratch test, are shown in the Table and demonstrate the effect on coating hardness of the thoroughness of drying the coating and removing from it the inorganic binder solubilizing agent (ammonia)

TABLE

| Expt No. | Temperature (°C) | Time (mins) | Scratch Hardness (loading) |
|---|---|---|---|
| 1 | ambient | days | 1400 |
| 2 | 60 | 15 | 2600 |
| 3 | 105 | 15 | 2400 |
| 4 | 180 | 15 | 2600 |
| 5 | 220 | 15 | 2500 |
| 6 | 60 | 60 | 2200 |
| 7 | 60 | 240 | 2400 |
| 8 | 60 | 420 | 2500 |
| 9 | 60 | 24 hrs | 2600 |
| 10 | 105 | 60 | 2500 |
| 11 | 105 | 240 | 2600 |
| 12 | 105 | 420 | 2600 |
| 13 | 105 | 24 hrs | 2500 |
| 14 | 180 | 60 | 2700 |
| 15 | 180 | 240 | 2600 |
| 16 | 180 | 420 | 2600 |
| 17 | 180 | 24 hrs | 2600 |
| 18 | 105 | 15 | 4000 |
| 19 | 180 | 15 | >4000 |
| 20 | 220 | 15 | >4000 |
| 21 | 60 | 60 | 1500 |
| 22 | 60 | 240 | 1800 |
| 23 | 60 | 420 | >4000 |
| 24 | 60 | 24 hrs | >4000 |

-40-

0132078

| Expt No. | Temperature (°C) | Time (mins) | Scratch Hardness (loading) |
|---|---|---|---|
| 25 | 105 | 60 | > 4000 |
| 26 | 105 | 240 | 2600 |
| 27 | 105 | 420 | 2600 |
| 28 | 105 | 24 hrs | > 4000 |
| 29 | 180 | 60 | > 4000 |
| 30 | 180 | 240 | > 4000 |
| 31 | 180 | 420 | > 4000 |
| 32 | 180 | 24 hrs | > 4000 |

Mild steel panels were used in Experiments 1-17; aluminium panels were used in experiments 18-32.

EXAMPLE 33

Zinc phosphate (110g) was dissolved in 25% aqueous ammonia (200g) and zinc oxide powder (90g) was dispersed in the solution using a Silverson mixer. To the dispersion was added a mixture of an organic polymer latex (91g of 50% solids Aquersymer ST4 1825) and 25% aqueous ammonia (50g) and the mixture was blended by high speed stirring.

A mild steel Q-panel was coated with the composition and dried at 105°C. The coating thickness was 26 microns.

The coating exhibited a rating of 1 in the cross-hatch test and a rating of 1 after a subsequent 'Sellotape' peel test.

EXAMPLE 34

A composition prepared as in Example 11 was poured into a mould of approx. dimensions 7.5 cm x 7.5 cm x 2 cm and allowed to dry by standing at ambient temperature for seveal days. A hard, water-stable block was obtained.

CLAIMS

1.   A coating and/or moulding composition comprising

(a)   a water-insoluble particulate inorganic material

(b)   a water-solubilized, film-forming inorganic binder
      material, and

(c)   an aqueous medium,

the amounts of (a) and (b) being respectively at least
10% by weight and at least 20% by weight of the combined
weight of (a) and (b).

2.   A coating and/or moulding composition as claimed in
claim 1 wherein component (b) comprises

(i)   a water-insoluble, film-forming inorganic binder
      and

(ii)  an agent to solubilise the film-forming inorganic
      binder in aqueous media.

3.   A coating and/or moulding composition as claimed in
claim 1 or 2, wherein component (b) comprises

(i)   a water-insoluble binding agent and

(ii)  ammonia

4.   A composition as claimed in claim 3 where in the
binding agent (i) is a phosphate.

5.   A composition as claimed in claim 4 wherein the
water-insoluble phosphate binding agent is zinc
phosphate.

6.   A composition as claimed in any one of the preceding
claims wherein the amount of component (a) is from 10% to
80% by weight based on the combined weight of components
(a) and (b).

7.   A composition as claimed in claim 6 wherein the
amount of component (a) is at least 40% by weight of the
combined weight of components (a) and (b).

8.   a composition as claimed in any one of the preceding
claims wherein the amount of component (b) is from 20% to
90% by weight based on the combined weight of components
(a) and (b).

9.   A composition as claimed in claim 8 wherein the amount of component (b) is from 30% to 75% by weight based on the combined weight of components (a) and (b).

10.   A composition as claimed in any one of the preceding claims wherein the amount of component (c) is up to 60% by weight of the composition.

11.   A composition as claimed in any one of the preceding claims wherein the particles of component (a) are of largest dimension below 100 microns.

12.   A composition as claimed in any one of the preceding claims wherein the particles of component (a) are platelets.

13.   A composition as claimed in claim 12 wherein the particulate inorganic material (component (a)) is a layer mineral.

14.   A composition as claimed in claim 13 wherein component (a) is Kaolin or another Kaolinite-containing clay.

15.   A composition as claimed in any one of claims 1 to 12 wherein component (a) comprises fibres.

16.   A coating and/or moulding composition as claimed in any one of the preceding claims which comprises in addition (d) an organic polymer the combined weight of components (a) and (b) being at least 70% by weight of the total weight of components (a), (b) and (d).

17.   A composition as claimed in claim 16 containing an organic polymer (d) in an amount of from 10% to 25% by weight based on the total weight of components (a), (b) and (d).

18.   A composition as claimed in claim 16 or 17 wherein the organic polymer is insoluble in water.

19.   A composition as claimed in claim 18 wherein the organic polymer comprises a copolymer of vinyl chloride, vinylidene chloride and one or more alkyl acrylates or alkyl methacrylates having from 1 to 17 carbon atoms in the alkyl group.

20. A composition as claimed in claim 18 wherein the organic polymer comprises a copolymer of an alkyl methacrylate, an alkyl acrylate and acrylic or methacrylic acid.

21. A method of producing an article which comprises shaping a composition as claimed in any one of claims 1 to 20 and removing the aqueous medium from the shaped composition.

22. A method of coating a substrate which comprises applying a layer of the composition claimed in any one of claims 1 to 20 to at least a part of the substrate and removing the aqueous medium from the composition.

23. A method as claimed in claim 20 or 21 which includes the step of removing or otherwise rendering inoperative the solubilising agent used to solubilize the film-forming inorganic binder (component (b)) in water.

24. An article or a coated substrate whenever produced by the method claimed in claim 22 or claim 23.

25. An article or coated substrate derived from the composition claimed in any one of claims 1 to 20 by removing the aqueous medium from the composition.

26. A method for the production of organic polymer compositions containing water-insoluble particulate inorganic filler materials which comprises incorporating in an organic polymer a dispersion of the particulate inorganic filler material in a solution of zinc phosphate in ammonia.

27. An organic polymer composition produced by the method claimed in claim 26.